# EUROPEAN PATENT APPLICATION

(11) **EP 2 492 034 A1**
(43) Date of publication of application: **29.08.2012**
(21) Application number: 10824944.2
(22) Date of filing: 19.10.2010
(51) Int. Cl.: B23B 51/08, B23B 51/00, B23D 77/14

(54) **DRILL FOR COMPOSITE MATERIAL AS WELL AS MACHINING METHOD USING SAME AND MACHINING APPARATUS USING SAME**

(30) Priority: 21.10.2009 JP 2009241971; 19.10.2010 JP 2010234838
(71) Applicant: Fukui Prefectural Government, Fukui-shi Fukui 910-8580 (JP)
(72) Inventor: SHIMADA, Hirofumi, Fukui-shi Fukui 910-0102 (JP)
(74) Representative: Lamb, Martin John Carstairs
(86) International application number: PCT/JP2010/068401
(87) International publication number: WO 2011/049095

(57) **Abstract**

An object is to provide a drill for a composite material which can realize high-quality boring hardly causing burrs or delamination in boring of a member to be machined containing a fiber reinforced composite material at least partially. A drill 1 for a composite material has a tip portion on which a tip cutting edge 5 is formed, a tapered portion 4 formed so as to be connected to the rear end side of the tip portion and formed so as to have a tapered shape with a diameter difference between an outer diameter on the tip side and a diameter on the rear end side larger than the diameter on the tip side, and a straight portion 3 formed so as to be connected to the rear end side of the tapered portion 4 and formed entirely so as to have the same diameter such that a finishing machining diameter larger than the outer diameter on the rear end side of the tapered portion 4 can be formed, and a helically twisted outer peripheral cutting edge 7 is formed on an outer periphery of the tapered portion 4 and set so that a boring diameter becomes continuously larger.

## Description

### Technical Field

The present invention relates to a drill suitable for boring of a composite material such as a fiber reinforced composite material represented by CFRP (Carbon-fiber Reinforced Plastics), and more particularly to a drill for a composite material capable of high-quality boring without causing burrs on a machined portion by one-time boring work or causing delamination on the bored surface.

### Background Art

In the boring of a fiber reinforced composite material and the like represented by CFRP, a method by using a straight cemented carbide drill coated with diamond is well-known.

However, when boring is performed at once with this method, cutting resistance at the time of the boring is large, and burrs are easily generated in the bored portion. As a method for suppressing generation of burrs, Patent Document 1 describes a drill for machining FPC (Flexible Printed Circuits) in which a flank is formed of a second flank and a third flank, and a relief angle of the third flank is set to 33° to 50° so that the length of a cutting edge on the outer periphery side is made smaller than that of the chisel edge. Since the width of a chip generated by a blade thereof is reduced, discharge performance of the chips is improved, and burrs caused by deterioration in discharge performance are suppressed.

In addition, Patent Documents 2 and 3 describe a drill which suppresses burrs on a through-hole by providing a small diameter portion on the tip side. Patent Document 4 describes a double-angle drill in which a primary blade having a tip angle of 118° and a secondary blade having a tip angle of approximately 30° are consecutively provided as a drill suitable for simultaneous boring of CFRP and an aluminum alloy plate. Patent Document 5 describes a double-stage drill having a prepared-hole boring portion for boring a prepared hole and a finishing portion, in which a diameter difference between the finishing portion and the prepared-hole boring portion is set to 0.1 mm or more and 2 mm or less as a drill suitable for boring of CFRP.

### Citation List

### Patent Document

[Patent Document 1] Japanese Unexamined Patent Application Publication No. 2005-88088
[Patent Document 2] Japanese Unexamined Patent Application Publication No. 2001-54810
[Patent Document 3] Japanese Unexamined Utility Model (Registration) Application Publication No. 1-99517
[Patent Document 4] Japanese Utility Model Registration No. 2602032
[Patent Document 5] Japanese Unexamined Patent Application Publication No. 2008-836

The fiber reinforced composite material or particularly, CFRP has high strength and rigidity despite its light weight and is frequently used as a structural material of an aircraft and the like. The CFRP used as the structural material of an aircraft is quite demanding in terms of quality, and it is required, for example, that no burrs protrude on an abutted surface with another member or the like and no delamination occurs on a bored surface of the CFRP.

However, since the CFRP contains a carbon fiber which cannot be cut easily and has a structure in which the carbon fiber and a resin material as a binder for binding it are formed in layers, burrs are easily generated on a machined portion rather than a member to be machined made of a single material of a resin material or a metal material in boring, and delamination is easily caused due to thrust resistance at the time of machining. Such a problem regarding boring of a fiber reinforced composite material cannot be effectively solved by the technologies described in Patent Documents 1 and 2 on practical side. Here, the "thrust resistance" is a resistance force applied in a direction opposite to the boring feed direction in drilling.

Patent Document 3 copes with the problem only by forming the small diameter portion on the tip side of the drill in the same manner as in Patent Document 2, and thus, when the member to be machined is CFRP, a satisfactory effect cannot be obtained for suppression of burrs even through the use of the technology described in Patent Document 3.

Therefore, when high-quality machining is required in boring of CFRP, a dedicated drill as described in Patent Document 4 is employed, but a double-angle drill described in Patent Document 4 has a problem in durability since burrs are generated in the machined portion in machining of 30 to 40 bores, and the drill is required to be replaced by a new one.

The drill described in Patent Document 4 is a drill having the double-stage structure with the prepared-hole boring portion and the finishing machining portion and has a machining form in which the burrs generated on the prepared-hole boring portion is removed by the finishing machining portion. However, in the case of a shape in which the diameter difference between the finishing machining portion and the prepared-hole boring portion is increased, the cutting mechanism is the same as in the case of usual drilling, and thus the suppression of tears or burrs is not fundamentally solved.

Therefore, in Patent Document 4, measures are taken to suppress generation of burrs due to chip clogging by improving chip discharging performance through reduction of a distortion angle. However, only the formation of the machining portion into a straight cutting edge structure cannot reduce the thrust resistance at the time of machining or does not lead to improvement of abrasion resistance of the blade tip of the tool, and thus the technology described in Patent Document 4 cannot realize a satisfactory effect, either.

In Patent Document 5, the prepared-hole boring portion has a plural-step structure, and thus the thrust resistance received by the drill at the time of diameter expansion is large, and improvement of abrasion resistance of the blade tip of the tool has a problem.

The present invention has been made in view of the above-described problems of the prior-art technologies and an object of the present invention is to realize high-quality boring in one step in which almost no burrs are generated or almost no delamination is caused in the member to be machined by performing composite machining by a drill provided with a tapered portion having a tapered shape and a straight portion.

### Disclosure of the Invention

A drill for a composite material according to the present invention is a drill for a composite material for boring a member to be machined containing a fiber reinforced composite material at least partially, having a tip portion on which a tip cutting edge is formed and a tapered portion formed so as to be connected to the rear end side of the tip portion and formed so as to have a tapered shape with a diameter difference between a diameter on the tip side and a diameter on the rear end side larger than the diameter on the tip side, in which a helically twisted outer peripheral cutting edge is formed on an outer periphery of the tapered portion and set so that a boring diameter becomes continuously larger, and a straight portion formed so as to be connected to the rear end side of the tapered portion and formed entirely so as to have the same diameter such that a finishing machining diameter larger than the diameter on the rear end side of the tapered portion can be formed is provided. Moreover, the tapered portion has a helically twisted chip discharge flute formed along the outer peripheral cutting edge. Moreover, the tapered portion has a taper angle set to 45° or less between an outer diameter line tangential to the outer diameter of the tip side as well as the outer diameter of the rear end side thereof and a center line of a drill axis. Moreover, the tip cutting edge of the tip portion has a tip angle of 60° to 140°, the outer peripheral cutting edge of the tapered portion is formed continuing to the tip cutting edge, and a rake angle is formed , or a rake angle and a relief angle are formed with respect to a conical face tangential to a land outer periphery of the tapered portion. Moreover, the tip portion, the tapered portion, and the straight portion are integrated coaxially. Moreover, the straight portion is formed into a shape of a circular land drill or a reamer. Moreover, an axis of the tip portion, an axis of the tapered portion, and an axis of the straight portion are matched with a rotation axis. Moreover, a connection portion between the tapered portion and the straight portion is connected by reducing, in a tapered shape, the outer diameter on the tip side of the straight portion toward the outer diameter on the rear end side of the tapered portion.

A machining method according to the present invention is a machining method for boring a member to be machined containing a fiber reinforced composite material at least partially by using the above drill, in which boring is performed by boring a prepared hole in the member to be machined by the tip cutting edge of the tip portion and the outer peripheral cutting edge of the tapered portion and by finishing the formed prepared hole by the straight portion.

A machining apparatus according to the present invention is provided with driving means for holding the drill and also for rotating and driving the drill around the drill axis, supporting means for supporting a member to be machined containing a fiber reinforced composite material at least partially, and moving means for relatively moving the driving means and/or the supporting means so that the drill performs boring on the member to be machined.

The drill for a composite material according to the present invention is capable of boring a prepared hole while expanding the diameter while cutting resistance is kept low by the tapered portion, burrs cannot occur easily on the machined portion, and moreover, the thrust resistance applied to the member to be machined in the boring direction is reduced, and a delamination force acting on the boundary surface in the composite material decreases and thus, delamination cannot easily occur. Moreover, since the straight portion for performing the finishing machining and the tapered portion are set coaxially and configured continuously and integrally and thus, highly accurate boring can be performed.

Moreover, since the drill is provided with the tip cutting edge, the outer peripheral cutting edge on which the rake angle or the rake angle and the relief angle are formed with respect to the conical face tangential to the land outer periphery of the tapered portion, and the straight portion connected to it, cutting resistance is reduced, and highly accurate boring can be realized hardly causing burrs or delamination.

### Brief Description of the Drawings

[Fig. 1] Fig. 1 is a side view illustrating a first embodiment according to the present invention.
[Fig. 2] Fig. 2 is a front view illustrating a tip portion of a drill illustrated in Fig. 1.
[Fig. 3] Fig. 3 is a cross-sectional view on arrow of A-A line in Fig. 1.
[Fig. 4] Fig. 4 is a cross-sectional view on arrow of B-B line in Fig. 1.
[Fig. 5] Fig. 5 is a side view illustrating a second embodiment according to the present invention.
[Fig. 6] Fig. 6 is a front view illustrating a tip portion of a drill illustrated in Fig. 5.
[Fig. 7] Fig. 7 is a cross-sectional view on arrow of C-C line in Fig. 5.
[Fig. 8] Fig. 8 is an enlarged cross-sectional view illustrating an outer peripheral cutting edge of a drill illustrated in Fig. 5.
[Fig. 9A-9C] Fig. 9A-9C are explanatory diagrams using models of a taper angle of a tapered portion forming the outer peripheral cutting edge and thrust resistance applied at the time of machining.
[Fig. 10A-10B] Fig. 10A-10B are explanatory diagrams regarding a difference in a cutting action between a prior-art straight twist drill and the drill of the present invention.
[Fig. 11A-11D] Fig. 11A-11D are explanatory diagrams regarding a machining method when the drill according to the present invention is used.
[Fig. 12] Fig. 12 is an appearance perspective view regarding the machining device using the drill according to the present invention.
[Fig. 13] Fig. 13 is a table illustrating a measurement result in a cutting test.
[Fig. 14] Fig. 14 is a table illustrating an observation result regarding presence or absence of generation of burrs close to a through-hole.
[Fig. 15] Fig. 15 is a table illustrating a photo photographing presence or absence of generation of burrs close to the through-hole.

### Description of the Reference Symbols

- 1: drill
- 2: shank
- 3: straight portion
- 4: tapered portion
- 5: tip cutting edge
- 6: chip discharge flute
- 7: outer peripheral cutting edge
- 8: margin
- 10: drill
- 11: shank
- 12: straight portion
- 13: tapered portion
- 14: tip cutting edge
- 15: chip discharge flute
- 16: outer peripheral cutting edge
- 17: tip edge line
- 18: tip edge line
- 19: coat
- 100: machining apparatus
- 101: Z-axis movement mechanism
- 102: XY-axis movement mechanism
- 103: spindle shaft
- 104: drill
- 105: member to be machined
- 106: supporting tool

### Best Modes for Carrying Out the Invention

Embodiments of the present invention applied to a double-bladed drill having two twist flutes will be described by referring to a first embodiment in which a straight portion is formed so as to have a reamer shape and a second embodiment in which the straight portion is formed so as to have a circular land drill shape.

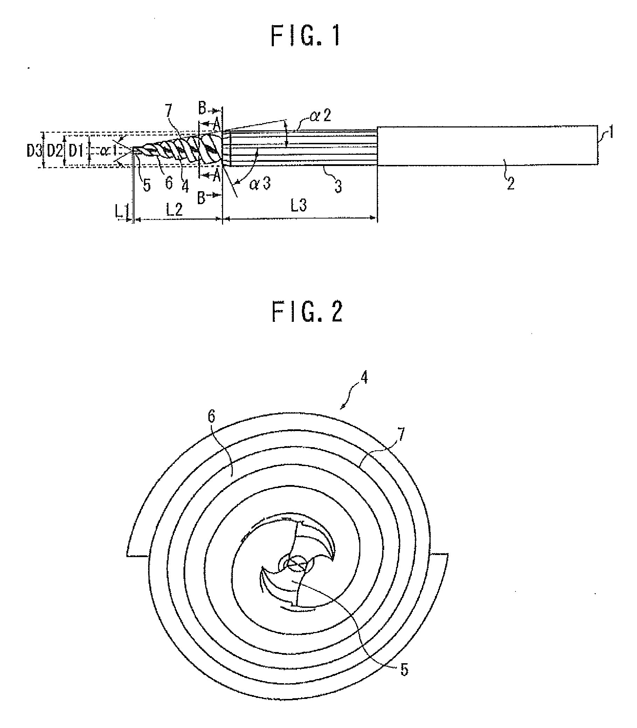

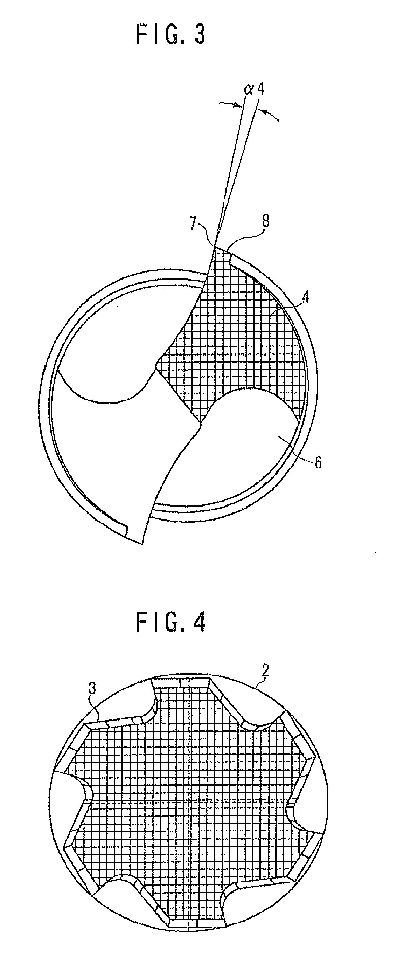

The first embodiment according to the present invention will be described on the basis of Figs. 1 to 4. Fig. 1 is a side view of a drill 1 regarding the first embodiment. Fig. 2 is a front view illustrating a tapered portion in Fig. 1 viewed from the tip side to the rear end side. Fig. 3 is a cross-sectional view on arrow of A-A line in Fig. 1. Fig. 4 is a cross-sectional view on arrow of B-B line in Fig. 1.

The drill 1 according to the present embodiment is a double-bladed drill, in which a straight portion 3 forming a reamer is connected to the tip of a shank 2, and a tapered portion 4 is integrally connected to the tip of the straight portion 3. At the tip of the tapered portion 4, a tip cutting edge 5 which is a tip portion is formed.

The tip cutting edge 5 is a cutting edge which first cuts into a member to be machined and performs cutting and induces diameter-expanding machining by means of an outer peripheral cutting edge 7 formed on the tapered portion 4. By forming its tip angle within a range of 60° to 140°, cutting performance and centripetal characteristic of the drill are improved, and wobbling of the drill is reduced.

As illustrated in Fig. 1, a length L1 of a step in the axial direction between a projection portion at the center part of the grinding surface having a candle-grinding shape and a cutting edge surface is set to 0.5 mm or more. By protruding the center part on the grinding surface from the cutting edge surface, centripetal characteristic at the time of prepared-hole boring is improved. By setting a tip angle α1 of the tip cutting edge 5 to an angle of 90°, rigidity and centripetal characteristic of the drill tip is improved, and the tip cutting edge 5 cuts better.

The tapered portion 4 has a tapered shape formed with a diameter difference between an outer diameter D1 on the tip side and an outer diameter D2 on the rear end side, and the straight portion 3 is integrally connected to the rear end side. The straight portion 3 is formed so as to have a diameter larger than that of the tapered portion 4. Here, the term "taper" means a shape in which a predetermined angle is set between a straight line tangential to the outer diameter on the tip side and the outer diameter on the rear end side and the drill center axis.

The tapered portion 4 has a candle-grinding shape as illustrated in Fig. 2 and has two outer peripheral cutting edges 7 formed continuing to the tip cutting edge 5. On the tapered outer periphery formed from the outer diameter D1 on the tip side to the outer diameter D2 on the rear end side, the helically twisted outer peripheral cutting edge 7 is formed and set so that a boring diameter continuously increases, and a chip discharge flute 6 helically twisted is formed along the outer peripheral cutting edge 7.

The chip discharge flute 6 provided on the outer periphery of the tapered portion 4 is formed as a flute having a twist angle α3. The twist angle α3 of the chip discharge flute 6 is preferably set to 60° or less in order to prevent the cutting edge from becoming too sharp and being chipped easily, though it depends on the size of the tip angle and the material of the member to be machined, and by setting the angle to 60° or less, chips containing a fiber material made of a composite material can be quickly discharged.

As illustrated in Fig. 3, the outer peripheral cutting edge 7 is formed of a crossing edge of a margin 8 and the chip discharge flute 6 and is formed as a cutting edge for which a positive rake angle α4 with respect to a conical face tangential to the land outer periphery of the tapered portion 4 is set to 10 to 30°. By forming as above, the angle of the edge becomes sharp and cutting performance can be remarkably improved.

As illustrated in Fig. 1, the taper angle α2 generated by the diameter difference between the tip side outer diameter D1 and the rear end side outer diameter D2 of the tapered portion 4 is set to 45° or less. When the taper angle α2 is larger than 45°, the thrust resistance exceeds a rotating force, and large burrs occur which can be no longer reliably removed by the straight portion. The length L2 from the tip side outer diameter D1 to the rear end side outer diameter D2 of the tapered portion 4 is determined by the taper angle α2.

As illustrated in Fig. 3, the margin 8 is formed on the outer periphery of the tapered portion 4 and is set as a cutting edge having a positive rake angle α4 of 10° to 30°.

As illustrated in Figs. 1 and 4, the tapered portion 4 is connected to the tip of the straight portion 3, and the shank is connected to the rear end of the straight portion 3. Particularly, at the connection portion between the tapered portion 4 and the straight portion 3, the tip side of the straight portion 3 is machined into a tapered shape in order to eliminate an extreme stepped shape.

The straight portion 3 is formed into a reamer shape in order to shape and machine the portion remaining after being cut out by the tapered portion 4 which performs prepared-hole boring and is formed to have a finishing machining diameter D3 larger than the rear end side outer diameter D2 of the tapered portion 4 by 0.01 to 0.1 mm. The axis of the tip cutting edge 5, the axis of the tapered portion 4, and the axis of the straight portion 3 are matched with the rotation axis, and the connection portion between the tapered portion 4 and the straight portion 3 is connected for machining with a tolerance of coaxiality of 0.01 while the outer diameter on the tip side of the straight portion 3 is reduced in a tapered shape toward the outer diameter on the rear end side of the tapered portion 4, and boring with good machining quality can be realized without causing burrs. Moreover, the tip cutting edge 5, the tapered portion 4, the straight portion 3, and the shank 2 are also connected with tolerance of coaxiality of 0.01

As the material of the drill, cemented carbide, high-speed steel, tool steel and the like can be included, and the use of the cemented carbide is preferable for the tapered portion 4 and the tip cutting edge 5 performing prepared-hole boring. The tapered portion 4 and the straight portion 3 may be formed of different materials, respectively.

In boring of a fiber reinforced composite material, the drill tip is severely chipped or worn, and thus the drill surface is preferably coated by a diamond thin film or a DLC film.

The drill 1 is attached to a known machining apparatus and used for boring of a composite material as a member to be machined. As the composite material, the drill is suitable for boring of a fiber reinforced composite material and particularly suitable for a composite material in which fibers are laminated in a layered state. The fiber reinforced composite materials include carbon-fiber reinforced plastic (CFRP), glass fiber reinforced plastic (GFRP), glass-mat reinforced thermoplastics (GMT), boron fiber reinforced plastic (BFRP), aramid fiber reinforced plastic (AFRP, KFRP), polyethylene fiber reinforced plastic (DFRP) and the like. The member to be machined may partially contain the fiber reinforced composite materials and is not particularly limited.

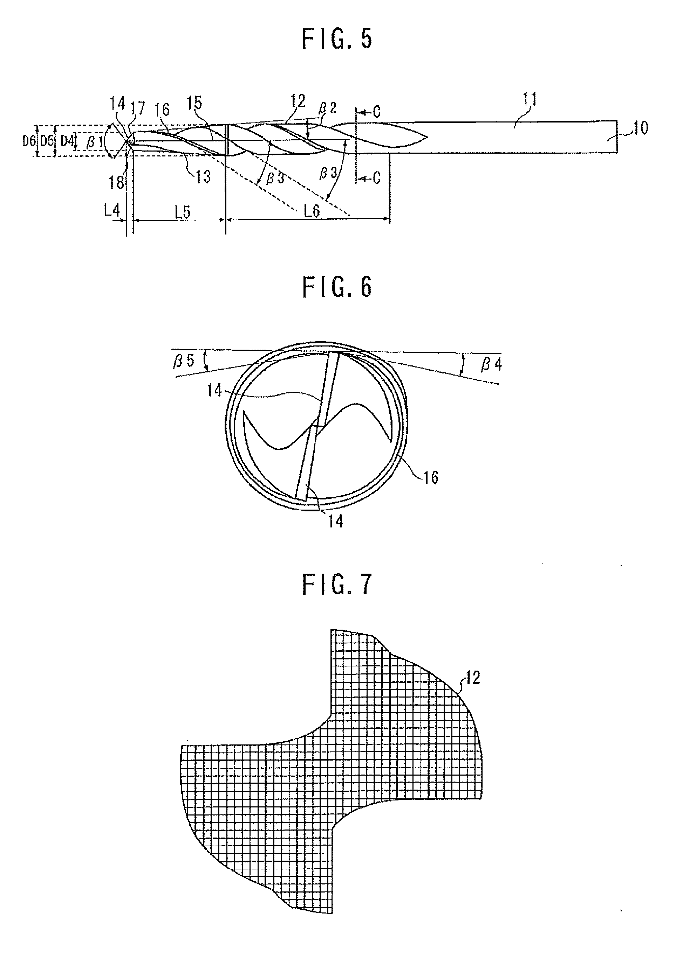

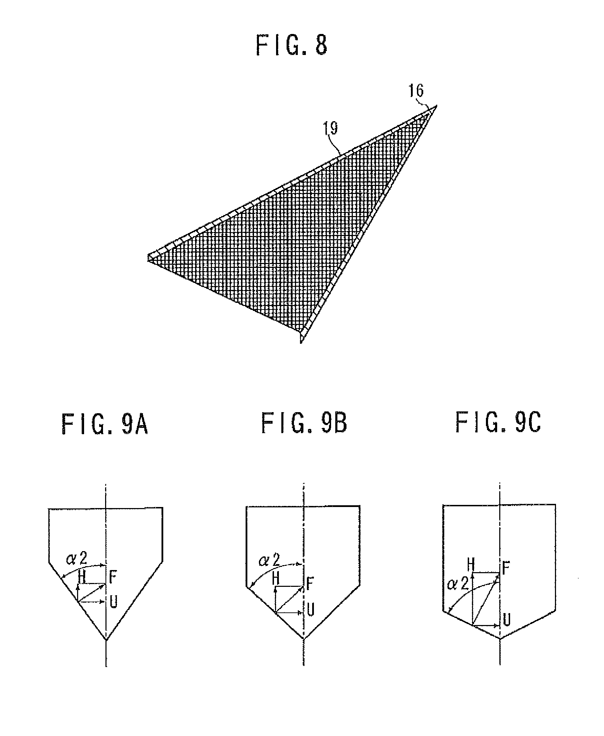

Subsequently, a second embodiment according to the present invention will be described on the basis of Figs. 5 to 8. Fig. 5 is a side view illustrating the second embodiment according to the present invention. Fig. 6 is a front view illustrating a tip portion of a drill illustrated in Fig. 5. Fig. 7 is a cross-sectional view on arrow of C-C line in Fig. 5. Fig. 8 is an enlarged cross-sectional view illustrating an outer peripheral cutting edge of the drill illustrated in Fig. 5.

A drill 10 according to the present embodiment includes a tip cutting edge 14 which is a tip portion, a tapered portion 13 having an outer peripheral cutting edge 16, a straight portion 12 formed so as to have a circular land drill shape, and a shank 11 as illustrated in Fig. 5, and they are connected coaxially and integrated.

The drill 10 is a double-bladed drill, in which the straight portion 12 is connected to the tip of the shank 11, and the tapered portion 13 is integrally connected to the tip of the straight portion 12. The tapered portion 13, the straight portion 12, and the shank 11 are connected with a tolerance of coaxiality of 0.01.

The tapered portion 13 has a tapered shape formed with a diameter difference between an outer diameter D4 on the tip side and an outer diameter D5 on the rear end side, and the straight portion 12 is integrally connected to the rear end side thereof. The straight portion 12 is formed so as to have a diameter larger than the tapered portion 13. To the tip side of the tapered portion 13, the tip cutting edge 14 having a tip angle β1 is connected.

On the tapered outer periphery formed from the outer diameter D4 on the tip side and the outer diameter D5 on the rear end side of the tapered portion 13, the helically twisted outer peripheral cutting edge 16 is formed and set so that a boring diameter continuously increases, and two helically twisted streaks of chip discharge flutes 15 are formed along the outer peripheral cutting edge 16. The straight portion 12 is formed so as to have a circular land drill shape for shaping and machining a portion remaining after cutting out by the tapered portion 13 which is a prepared-hole boring portion.

As illustrated in Fig. 5, the tip cutting edge 14 which is a tip portion has the tip angle β1 formed by tip edge lines 17 and 18, and the tip angle β1 is set within a range of 60° to 140°.

As illustrated in Fig. 5, on the outer peripheries of the tapered portion 13 and the straight portion 12, the chip discharge flute 15 is continuously formed helically with a twist angle β3. The twist angle β3 of the chip discharge flute 15 is preferably set to 60° or less in order to prevent the cutting edge from being too sharp and chipping easily, though it depends on the size of the tip angle and the material of the member to be machined, and by setting it to 60° or less, chips containing the fiber material of the composite material can be quickly discharged.

In the outer peripheral cutting edge 16 of the tapered portion 13 which is a prepared-hole boring portion, the margin 8 as illustrated in Fig. 3 is not set, and as illustrated in Fig. 6, a rake angle β5 and a relief angle β4 are set within a range of 5° to 20°, respectively, with respect to the conical face tangential to the land outer periphery of the tapered portion 13, and the outer peripheral cutting edge 16 is formed on an outer peripheral edge of the tapered portion 13.

As illustrated in Fig. 5, the taper angle β2 generated by the diameter difference between the tip side outer diameter D4 and the rear end side outer diameter D5 of the tapered portion 13 is set to 45° or less. When the taper angle β2 becomes larger than 45°, the thrust resistance exceeds a rotating force, and thus large burrs are generated which can be no longer reliably removed by the straight portion. A length L5 from the tip side outer diameter D4 to the rear end side outer diameter D5 of the tapered portion 13 is determined by the taper angle β2.

Fig. 7 is a cross-sectional view of the straight portion 12 illustrating a C-C section illustrated in Fig. 5 viewed from the rear end side of the straight portion 12 in the direction of the tapered portion 13. The straight portion 12 is formed so as to have a circular land shape and is formed to have a finishing machining diameter D6 larger than the rear end side outer diameter D5 of the tapered portion 13 by 0.01 to 0.1 mm. The axis of the tip cutting edge 14, the axis of the tapered portion 13, and the axis of the straight portion 12 are matched with the rotation axis, and the connection portion between the tapered portion 13 and the straight portion 12 is connected in a tapered shape in which the tip side outer diameter of the straight portion 12 is reduced toward the rear end side outer diameter of the tapered portion 13. Moreover, the tip cutting edge 14, the tapered portion 13, the straight portion 12, and the shank 11 are integrated with a tolerance of coaxiality of 0.01.

The surface of the drill 10 main body is covered with a coat 19 made of diamond as illustrated in Fig. 8. The coat 19 can be formed by the known CVD method or PVD method, for example, and may be a DLC film. The drill specialized in machining of a composite material such as a fiber reinforced resin material requires sharpening of the tip edge so that the edge can cut well. By using a superfine cemented carbide material for a drill base material, a radius of the edge tip can be shaped with a small size. When the tip edge is sharp, the edge tip can be easily chipped or worn, and thus, by forming the coat 19 using nano-diamond coating, the outer peripheral cutting edge can cut well for a long time without increasing the tip edge radius. Moreover, even when the cutting edge no longer cuts well due to abrasion of the tip edge or the like, the burrs occurring at the time of the prepared-hole boring can be effectively removed by the straight portion 12, and thus, highly accurate boring can be performed stably.

Fig. 9A-9C are explanatory diagrams using models of the taper angle of the tapered portion forming the outer peripheral cutting edge and the thrust resistance applied at the time of machining. The tapered portion has the taper angle α2 (β2 in the second embodiment) and cutting resistance F applied at the time of boring is expressed by vectors from the center of the tapered surface to an intersection with a perpendicular line drawn to the center line. A perpendicular component of the cutting resistance F is thrust resistance H, and a horizontal component of F is a thrust force U.

Fig. 9A is a model when the taper angle α2 is less than 45°, Fig. 9B is a model when the taper angle α2 is at 45°, and Fig. 9C is a model when the taper angle α2 is larger than 45°, and the cutting resistance F, the thrust resistance H, and the thrust force U are indicated by vectors, respectively. In Fig. 9A-9C, the thrust resistance H increases as the taper angle α2 becomes larger, and by setting the taper angle α2 to 45° or less, the thrust resistance H becomes smaller, and contribution can be made to reduction of generation of burrs and delamination.

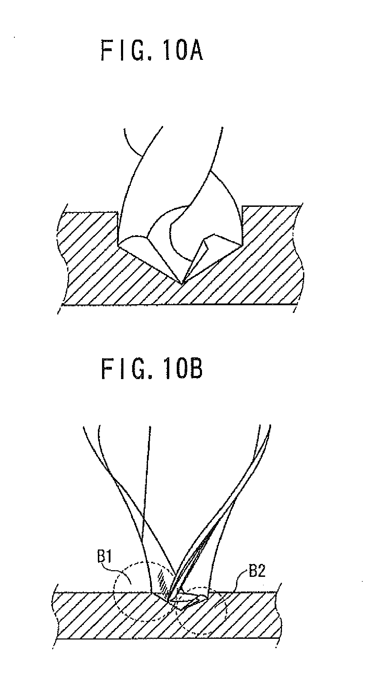

Fig. 10A-10B are explanatory diagrams regarding a difference in a cutting action between a prior-art straight twist drill and the drill of the present invention. Fig. 10A is an explanatory diagram of the cutting action of the straight twist drill, in which a straight cutting blade provided at the tip is rotated in the axial direction and performs cutting, which is the cutting action similar to cutting with a plane. Fig. 10B is an explanatory diagram of the cutting action by the drill of the present invention, in which a portion B2 has a role of cutting similar to the cutting action of the straight twist drill and also of improving centripetal characteristic for inducing the outer peripheral cutting edge provided on the tapered portion. A portion B1 indicates the cutting action by the outer peripheral cutting edge of the tapered portion, and since the outer peripheral cutting edge provided on the tapered portion is formed helically so as to have an arc shape and formed so as to have a tapered shape in general, the cutting by point contact is continuously performed in the outer peripheral cutting edge and the member to be machined, powder-state chips are generated, and contribution is made to reduction of abrasion of the outer peripheral cutting edge. Moreover, the outer peripheral cutting edge can perform the cutting action similar to the cutting with a knife by means of inclination by the twist angle and rotation of the cutting edge in the direction of the outer peripheral surface accompanying rotation of the drill, and a sharp cutting edge can be obtained. Furthermore, since the outer peripheral cutting edge is formed so as to have the helical tapered shape in general, the total length of the cutting edge whose diameter is to be enlarged can be taken long, and contribution can be made also to prolongation of the tool life.

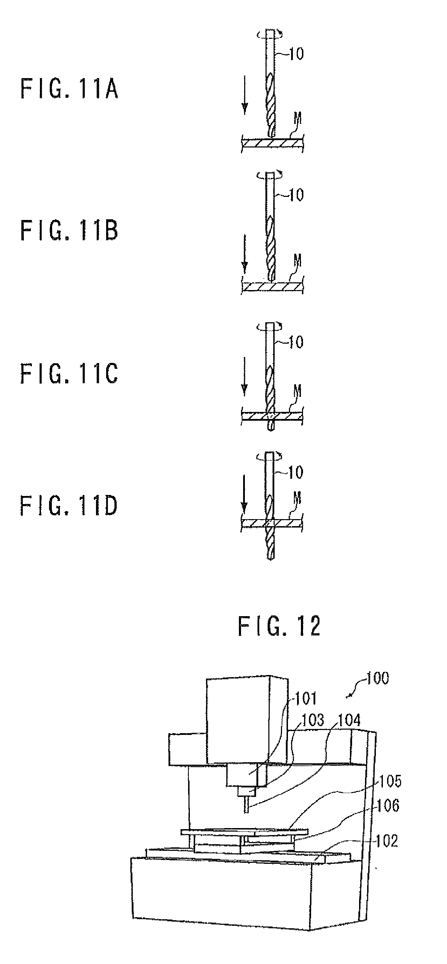

Fig. 11A-11D are explanatory diagrams regarding a machining method when the drill according to the present invention is used. Fig. 11A illustrates a state immediately before boring is started, in which the tip portion of the drill 10 is set so as to be in contact with a plate-like member to be machined M at a right angle. Then, in Fig. 11B, the tip cutting edge at the tip portion first cuts the member to be machined M (e.g.: fiber reinforced composite material) while the drill 10 is rotating and induces diameter-expanding machining by the outer peripheral cutting edge of the tapered portion. Then, in Fig. 11C, the tapered portion advances into the member to be machined M, and diameter-expanding machining is performed by the outer peripheral cutting edge while the drill 10 is rotating. At this stage, prepared-hole boring is performed without causing delamination or burrs in the machined portion. Then, in Fig. 11D, the straight portion advances into the member to be machined and performs finishing machining while the drill 10 is rotating. Then, after the straight portion withdraws from the member to be machined M while performing the finishing machining, the drill 10 is pulled out and boring is finished.

Fig. 12 is an appearance perspective view of a machining apparatus using the drill according to the present invention. A machining apparatus 100 includes moving means provided with a movable mechanism in three axial directions of X, Y, and Z by a ball screw mechanism, a linear motor mechanism or the like and a five-axes mechanism to which a rotation mechanism around the X-axis and the Y-axis is added. A Z-axis movement mechanism 101 supports a drill 104 attached to a spindle shaft 103 and moves it vertically. As the moving means, a ball screw mechanism or a linear motor mechanism is used. The Z-axis movement mechanism 101 is provided with a driving source for rotating and driving the spindle shaft 103.

An XY-axis movement mechanism 102 moves an installation table along the X-axis or the Y-axis or an XY-composite axis. As the moving means, a ball screw mechanism or a linear motor mechanism is used. On the installation table, a supporting tool 106 such as a vise or a restricting jig or the like is arranged, and a member to be machined 105 made of a fiber reinforced composite material or the like is placed and fixed to the supporting tool 106. The XY-axis movement mechanism 102 is driven by a ball screw mechanism or a linear motor mechanism.

Then, by controlling the Z-axis movement mechanism 101 and the XY-axis movement mechanism 102, boring is performed for the member to be machined 105 while the drill 104 is rotated and driven.

As the supporting tool 106, those having a function of sandwiching the member to be machined 105 in the thickness direction or the planar direction may be used. Alternatively, the spindle shaft may be arranged on the X-axis or the Y-axis.

### [Example]

### [Example 1]

As illustrated in Fig. 5, a cutting test was conducted for a drill provided with a tapered portion on which a tip portion having a tip cutting edge and an outer peripheral cutting edge are formed and a straight portion, and thrust resistance (a force applied in the drill axial direction) was measured.

In the cutting test, four types of drills illustrated in Fig. 5 for which the margin is not set for the outer peripheral cutting edge and three types of drills as comparative examples, that is, seven types of drills in total were used.

As the drill illustrated in Fig. 5, the common specification was set such that the drill base material was cemented carbide and diamond coating, the tip angle β1 of the drill tip portion = 135°, the drill whole length at 103 mm, the taper angle β2 of the tapered portion = 2°, the tip side outer diameter D4 of the tapered portion = 3.0 mm, the rear end side outer diameter D5 of the tapered portion = 5.0 mm, the outer diameter D6 of the straight portion = 5.0 mm, the shank diameter at 6.0 mm, the relief angle β4 of the outer peripheral cutting edge of the tapered portion = 10°, and the rake angle β5 of the outer peripheral cutting edge of the tapered portion = 10°, and three types of drills A to C with the twist angle β3 of the chip discharge flute to β3 = 20° (drill A), β3 = 30° (drill B), and β3 = 40° (drill C) were used. Moreover, a drill D using high-speed steel for the drill base, coated with TiCN coating, setting the twist angle β3 = 20° (drill D) and the other conditions being the same as those of the drills A to C was also used, that is, four types of drills were used.

As a drill for a comparative example, a drill without a taper angle in the outer peripheral cutting edge on the drill outer peripheral edge (β2 = 0°) was used as a comparative target, and three types of drills, one of which uses cemented carbide as the drill base material, diamond coating, the drill tip angle β1 = 118°, the twist angle β3 of the outer peripheral cutting edge = 30°, and the drill outer diameter D4 = D5 = D6 = 5.0 mm (drill E), another of which uses cemented carbide as the drill base material, TiC coating, the drill tip angle β1 = 140°, the twist angle β3 of the outer peripheral cutting edge = 30°, and the drill outer diameter D4 = D5 = D6 = 5.0 mm (drill F), and the rest of which uses high-speed steel as the drill base material, the tip shape as special grinding (candle shape), the twist angle β3 of the outer peripheral cutting edge = 30°, and the drill outer diameter D4 = D5 = D6 = 5.0 mm (drill G) were used.

The cutting test was conducted under the following conditions, and carbon-fiber reinforced plastic was cut with the purpose of measurement of thrust resistance (a force applied in the drill axial direction) in the boring.
<Cutting speed>
   when the drill base material is cemented carbide: 100 m/min
   when the drill base material is high-speed steel: 24 m/min
<Drill feeding speed>
   when the drill base material is cemented carbide: 200 m/min
   when the drill base material is high-speed steel: 150 m/min
<Member to be machined>
   plate-like body having plate thickness of 5 mm made of carbon-fiber reinforced plastic (by Toray: model T700)
<Cutting oil>
   not used
<Drilling machine>
   vertical MC manufactured by Matsuura Machinery Corporation (model: MC-510VF-Gr; model number: BT40)
<Cutting resistance measuring instrument>
   cutting dynamometer manufactured by Kistler Corporation (model: 9123C)

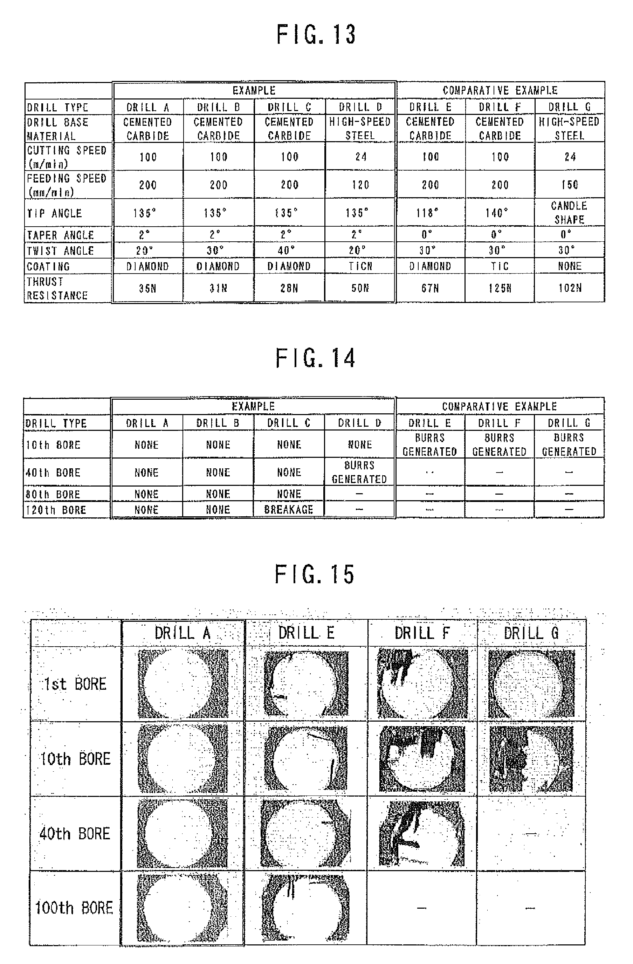

Fig. 13 is a table illustrating a measurement result in the cutting test in which the drills A to D illustrated in Fig. 5 for which the margin is not set in the outer peripheral cutting edge and the drills E to G in the comparative examples. Regarding the thrust resistance (unit: N), average values of measurement values in drilling of the first to fifth bores were calculated.

Examining the values of the thrust resistance, they are 50N or less in all the examples and are lower than those in the comparative examples. Moreover, even in the case of cutting with the drill D having the base material made of high-speed steel that is considered to be unsuitable for cutting of carbon-fiber reinforced plastic in general, the thrust resistance is lower than that of the drill E made of cemented carbide in the comparative example, and favorable cutting characteristics are exhibited.

From the above result, it was found that the drill provided with the tapered portion on which the tip portion having the tip cutting edge and the outer peripheral cutting edge are formed and the straight portion, as illustrated in Fig. 5 is effective in reduction of the thrust resistance. Furthermore, it was found that the thrust resistance is lowered by increasing the twist angle of the outer peripheral cutting edge.

### [Example 2]

Subsequently, the similar cutting test was conducted by using the seven types of drills similar to those in the example 1, and presence or absence of burrs near a through-hole in the member to be machined (carbon-fiber reinforced plastic) was visually observed.

Fig. 14 is a table illustrating an observation result of machining up to 10 bores, 40 bores, 80 bores and 120 bores, respectively, concerning presence or absence of generation of burrs near the through-hole by the seven types of drills.

Examining the observation result, there was no generation of burrs in the drills A and B of the example even in machining of 120 bores. The drill C was broken on the 92^{nd} bore. The drill C is considered to have been broken due to a synergetic effect of reduction in the drill core thickness and deterioration of chip discharging performance since the twist angle which is an angle of the chip discharge flute was increased. In contrast, the effect substantially equal to that of the drill E can be obtained for the drill D although the drill is made of high-speed steel, and it was found that the drills in the example had a large effect of suppressing generation of burrs.

Fig. 15 is a table illustrating photos taken of the through-holes when machining was performed up to one bore, 10 bores, 40 bores, and 100 bores concerning presence or absence of generation of burrs after the cutting test on the drill A which is the example and the drills E to G which are the comparative examples.

As known from the photos, when the drill of the comparative example was used, favorable machining was not possible because of the generation of burrs from the first bore.

From the above results, by providing a structure in which the tip portion having the tip cutting edge, the tapered portion having the outer peripheral cutting edge, and the straight portion for performing finishing machining are connected and integrated, stable cutting without causing burrs or delamination was able to be performed on the composite material, and boring with high quality and high accuracy was able to be realized by a single drill with a simple structure and a low cost.

## Claims

1. A drill for a composite material for boring a member to be machined containing a fiber reinforced composite material at least partially, comprising:
a tip portion on which a tip cutting edge is formed;
a tapered portion formed so as to be connected to a rear end side of the tip portion and formed so as to have a tapered shape with a diameter difference between an outer diameter on the tip side and a diameter on the rear end side larger than the diameter on the tip side; and
a straight portion formed so as to be connected to the rear end side of the tapered portion and formed entirely so as to have the same diameter such that a finishing machining diameter larger than the diameter on the rear end side of the tapered portion can be formed, wherein
a helically twisted outer peripheral cutting edge is formed on an outer periphery of the tapered portion and is set so that a boring diameter becomes continuously larger.

2. The drill according to claim 1, wherein
a helically twisted chip discharge flute is formed along the outer peripheral cutting edge in the tapered portion.

3. The drill according to claim 1 or 2, wherein
the tapered portion has a taper angle set to 45° or less between an outer diameter line tangential to the outer diameter of the tip side as well as the outer diameter of the rear end side and a center line of a drill axis.

4. The drill according to any of claims 1 to 3, wherein
the tip cutting edge of the tip portion has a tip angle of 60° to 140°;
the outer peripheral cutting edge of the tapered portion is formed continuing to the tip cutting edge; and
a rake angle is formed , or a rake angle and a relief angle are formed with respect to a conical face tangential to a land outer periphery of the tapered portion.

5. The drill according to any of claims 1 to 4, wherein
the tip portion, the tapered portion, and the straight portion are integrated coaxially.

6. The drill according to claim 5, wherein
the straight portion is formed into a shape of a circular land drill or a reamer.

7. The drill according to claim 5 or 6, wherein
an axis of the tip portion, an axis of the tapered portion, and an axis of the straight portion are matched with a rotation axis.

8. The drill according to any one of claims 5 to 7, wherein
a connection portion between the tapered portion and the straight portion is connected by reducing, in a tapered shape, the outer diameter on the tip side of the straight portion toward the outer diameter on the rear end side of the tapered portion.

9. A boring tool provided with the drill according to any of claims 1 to 8.

10. A machining method for boring a member to be machined containing a fiber reinforced composite material at least partially by using the drill according to any of claims 1 to 8, wherein,
boring is performed by boring a prepared hole in the member to be machined by the tip cutting edge of the tip portion and the outer peripheral cutting edge of the tapered portion and by finishing the formed prepared hole by the straight portion.

11. A machining apparatus comprising:
driving means for holding the drill according to any of claims 1 to 8 and also for rotating and driving the drill around the drill axis;
supporting means for supporting a member to be machined containing a fiber reinforced composite material at least partially; and
moving means for relatively moving the driving means and/or the supporting means so that the drill performs boring on the member to be machined.
